# EUROPÄISCHE PATENTSCHRIFT

(11) **EP 1 882 405 B1**
(45) Veröffentlichungstag und Bekanntmachung des Hinweises auf die Patenterteilung: **21.07.2010**
(21) Anmeldenummer: 07007801.9
(22) Anmeldetag: 17.04.2007
(51) Int. Cl.: A01C 7/10

(54) **Sämaschine**
Sowing machine
Semoir

(30) Priorität: 27.07.2006 DE 102006034802
(43) Veröffentlichungstag der Anmeldung: 30.01.2008
(73) Patentinhaber: Alois Pöttinger Maschinenfabrik Ges. m.b.H., 4710 Grieskirchen (AT)
(72) Erfinder: Baldinger, Markus, Dr., 4084 St. Agatha (AT); Stadlbauer, Franz, 4633 Kematen (AT); Preimess, Hans-Jörg, 9811 Lendorf (AT)
(74) Vertreter: Thoma, Michael

(56) Entgegenhaltungen:
- EP-A- 1 566 089
- EP-A- 1 772 048
- EP-A- 1 889 532
- WO-A-2005/096799
- US-A- 6 093 926

## Beschreibung

Die vorliegende Erfindung betrifft eine Sämaschine mit einem Saatgutspeicher, der über einen Saatgutverteiler mit einer Mehrzahl von Ausbringelementen, insbesondere Säscharen oder Särohren, verbindbar ist, wobei den Ausbringelementen jeweils eine Vereinzelungsvorrichtung zur Vereinzelung der Saatgutkörner zugeordnet ist und eine Bilderfassungseinrichtung mit zumindest einer Kamera zur Erfassung des Saatgutaustrags vorgesehen ist.

Bei Sämaschinen mit Einzelkornaustrag ist es bekannt, die Körnerzahl mit Bilderfassungseinrichtungen, die Kameras aufweisen, zu zählen. Der Saatgutaustrag soll möglichst genau gesteuert werden, wobei nicht nur die absolute Körnerzahl, sondern auch die zeitliche Abfolge des Austrags der einzelnen Körner von Bedeutung ist. So soll beispielsweise geschwindigkeitsabhängig der zeitliche Abstand der aus einem Särohr ausgetragenen Körner möglichst gleichmäßig sein, um einen definierten Abstand der abgelegten Körner voneinander zu erreichen. So zeigen beispielsweise die WO 2005/096799 A1 und die WO 2005/096798 A1 Sämaschinen, bei denen die Saatgutförderung in dem Zuführrohr vom Saatgutspeicher zu dem Verteiler oder alternativ in den Saatrohren vom Verteiler zu den Säscharen mit einer Bilderfassungseinrichtung überwacht wird. Die Bilderfassungseinrichtung besitzt hierzu zwei in einer Ebene angeordnete Kameras, die zueinander senkrechte Blickrichtungen haben, um möglicherweise in der einen Blickrichtung verdeckte Saatgutkörner mit der anderen Kamera erfassen zu können. Eine ähnliche Sämaschine zeigt die EP 1 566 089 A1, die in dem Steigrohr zum Verteilerkopf der Sämaschine eine Sensoreinheit mit mehreren Lichtschranken umfassend jeweils einen Lichtemitter und einen Lichtdetektor aufweist, um die Saatgutkörner optisch zu zählen.

Eine solche Körnerzählung im Bereich des zum Verteilerkopf führenden Steigrohres ist jedoch aufgrund der dortigen hohen Körnerdichte auch mit mehreren Sensoren fehlerbehaftet bzw. hinsichtlich der Bildauswertung schwierig. Zudem werden Unregelmäßigkeiten im Saatgutaustrag bisweilen auch im Bereich der Vereinzelungsvorrichtung verursacht, die von der genannten Körnererfassung im Steigrohr vor dem Verteilerkopf nicht erfasst werden können.

Der vorliegenden Erfindung liegt daher die Aufgabe zugrunde, eine verbesserte Sämaschine der genannten Art zu schaffen, die Nachteile des Standes der Technik vermeidet und letzteren in vorteilhafter Weise weiterbildet. Vorzugsweise soll eine verbesserte Überwachung der Vereinzelungsqualität erreicht werden.

Die vorliegende Erfindung löst diese Aufgabe durch eine Sämaschine mit den Merkmalen des Anspruches 1. Bevorzugte Ausgestaltungen der Erfindung sind Gegenstand der abhängigen Ansprüche.

Es wird also vorgeschlagen, mit Hilfe der Bilderfassungseinrichtung sowohl den Saatguteinlauf als auch den Saatgutaustritt an der Vereinzelungsvorrichtung zu überwachen, um dort Auffälligkeiten und insbesondere Zusammenhänge zwischen Unregelmäßigkeiten im Saatguteinlauf und im Saatgutaustritt zu erfassen. Erfindungsgemäß besitzt die Bilderfassungseinrichtung eine erste Kamera, die den Einlauf der Vereinzelungsvorrichtung beobachtet, und eine zweite Kamera, die den Austritt der Vereinzelungsvorrichtung beobachtet. Insbesondere kann mit der ersten Kamera die zeitliche Abfolge der in die Vereinzelungsvorrichtung einlaufenden Saatgutkörner und mit der zweiten Kamera der zeitliche Ablauf der aus der Vereinzelungseinrichtung austretenden Saatgutkörner erfasst werden, so dass kausale Zusammenhänge zwischen Einlauf- und Auswurfhäufungen erkannt werden können.

In Weiterbildung der Erfindung kann in Abhängigkeit der von den beiden Kameras gelieferten Bilder des Saatguteinlaufs und des Saatgutauslaufs an der Vereinzelungsvorrichtung in die Steuerung der Sämaschine eingegriffen werden, insbesondere können Betriebsparameter der Sämaschine in Abhängigkeit von Einlaufhäufungen und/oder Auswurfhäufungen von Saatgut an der Vereinzelungsvorrichtung verändert werden. Die beiden Kameras der Bilderfassungseinrichtung können in Weiterbildung der Erfindung mit einer Steuereinrichtung zur Steuerung zumindest eines Maschinenparameters in Abhängigkeit der von den beiden Kameras erfassten Bilder verbunden sein. Als bildabhängig steuerbare Maschinenparameter kommen grundsätzlich verschiedene in Betracht, so insbesondere eine Gebläseleistung, eine Dosiergeschwindigkeit, die Geschwindigkeit der Vereinzelungsvorrichtung, eine Verteilkopfjustierung, eine Schlepperdrehzahl und/oder eine Ablagetiefe. Die Steuereinrichtung kann in Abhängigkeit der von den beiden Kameras gelieferten Bilder entsprechende Stellsignale zur Ansteuerung von Stellgliedern erzeugen, mit Hilfe derer die besagten Betriebsparameter verändert werden können.

Die Steuereinrichtung kann hierbei eine Bildvergleichseinrichtung umfassen, mit Hilfe derer die Bilder der ersten Kamera mit den Bildern der zweiten Kamera verglichen werden. In Abhängigkeit dieses Bildvergleichs kann eine Bildauswerteeinrichtung kausale Zusammenhänge zwischen Einlaufhäufungen und Auswurfhäufungen bestimmen.

Insbesondere kann die Bildauswerteeinrichtung statistisch arbeitend ausgebildet sein und den zeitlichen Verlauf der Körnerzahl im Einlauf der Vereinzelungsvorrichtung und den zeitlichen Verlauf der Körnerzahl im Austritt der Vereinzelungsvorrichtung bestimmen und miteinander vergleichen. Dabei ist es vorteilhaft, wenn die Bildauswerteeinrichtung anhand der Bilder der ersten Kamera bestimmt, wie und ob die Körner am Einlauf der Vereinzelungsvorrichtung hintereinander ankommen, wodurch die Ursache für die jeweilige Vereinzelungsqualität bestimmt wird. Andererseits kann die Bildauswerteeinrichtung anhand der Bilder der zweiten Kamera am Auslauf der Vereinzelungsvorrichtung die Körner zählen und/oder deren zeitliche Abfolge bestimmen.

Um eine präzise Bilderfassung am Einlauf und am Auslauf der Vereinzelungsvorrichtung zu erreichen, können die Kameras der Bilderfassungseinrichtung verschieden ausgebildet sein, wobei grundsätzlich beide Kameras dieselbe oder eine ähnliche Ausbildung haben können. In Weiterbildung der Erfindung jedoch sind die erste Kamera und die zweite Kamera unterschiedlich ausgebildet.

Dabei kann nach einer vorteilhaften Ausführung der Erfindung die erste Kamera im Auflichtverfahren arbeiten. Mittels einer Kollimationsoptik werden die Körner im Einlaufbereich beleuchtet, wobei die erste Kamera die beleuchtete Seite der Körner erfasst. Insbesondere kann die erste Kamera dabei die am Umfang eines Rotors der Vereinzelungsvorrichtung transportierten Körner beobachten, die von dem Rotor mitgenommen und vereinzelt werden. Insbesondere kann die Kamera hierbei den Umfangsabschnitt des Rotors beobachten, der in Drehrichtung des Rotors betrachtet stromab eines Aufgabekanals, jedoch stromauf eines Austrittskanals liegt.

Die zweite Kamera kann in Weiterbildung der Erfindung im Durchlichtverfahren arbeiten. Eine Kollimationsoptik mit einer Lichtquelle bestrahlt die am Austritt der Vereinzelungsvorrichtung austretenden Saatgutkörner von der einen Seite her, wobei die zweite Kamera die Saatgutkörner von der anderen Seite her beobachtet, so dass faktisch die dunkle Seite bzw. der Schatten der einzelnen Saatgutkörner beobachtet wird.

In bevorzugter Ausgestaltung der Erfindung sind die beiden Kameras Zeilenkameras.

Die beiden Kameras können grundsätzlich mit verschiedenen Belichtungszeiten arbeiten. In Weiterbildung der Erfindung liegen die Belichtungszeiten der beiden Kameras im Bereich von 2 Millisekunden bis 50 Millisekunden. Vorteilhafterweise können die Belichtungszeiten der Kameras variabel gesteuert werden, insbesondere in Abhängigkeit eines Betriebsparameters der Vereinzelungsvorrichtung. So kann die Belichtungszeit in Abhängigkeit der Drehzahl der Vereinzelungsvorrichtung verändert werden.

Die Erfindung wird nachfolgend anhand eines Ausführungsbeispiels und zugehöriger Zeichnungen näher erläutert. In den Zeichnungen zeigen:
- Fig. 1:: eine schematische, perspektivische Darstellung einer Sämaschine nach einer bevorzugten Ausführung der Erfindung,
- Fig. 2:: eine schematische Darstellung des Wegs des Saatgutaustrags und der hierbei wirksamen Maschinenkomponenten der Sämaschine aus Fig. 1, und
- Fig. 3:: eine schematische Darstellung der Bilderfassungsvorrichtung zur Überwachung der Vereinzelungsqualität der Sämaschine aus den vorhergehenden Figuren.

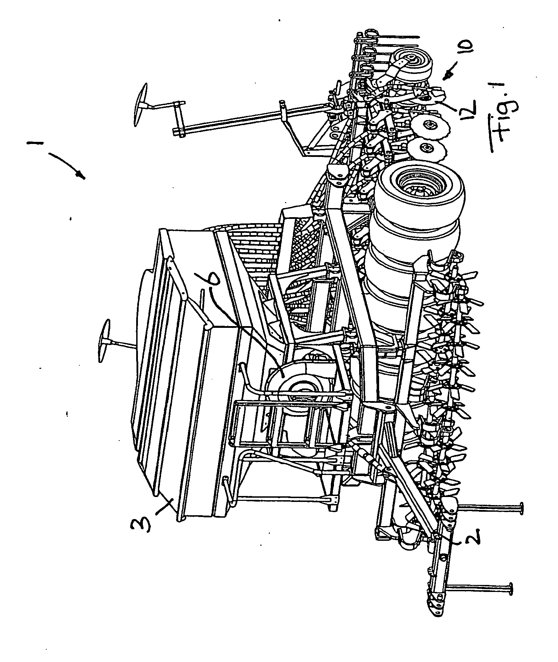

Die in Figur 1 gezeichnete Sämaschine 1 ist als Anbaugerät ausgeführt und kann über eine Deichsel 2 an einen nicht gezeichneten Schlepper angebaut werden.

Die Sämaschine 1 umfasst einen Saatgutspeicher 3, aus dem durch eine zentrale Dosiervorrichtung 4, beispielsweise umfassend einen Dosierrotor, eine gewünschte Saatgutmenge in Form von Samenkörnern, Düngemittelkörnern und dergleichen in einen Förderkanal 5 gegeben werden kann. Mittels eines mit dem Förderkanal 5 verbindbaren Gebläses 6 kann das von der Dosiervorrichtung. 4 bereitgestellte Saatgut über den Förderkanal 5 und ein damit verbundenes Steigrohr 7 in den Verteilerkopf 8 eines Saatgutverteilers 9 gefördert werden. Der genannte Verteilerkopf 8 verteiit das ankommende Saatgut auf eine Mehrzahl von Ausbringelementen 10, mit denen der Verteilerkopf 8 jeweils über Säleitungen 11 verbunden ist. In der gezeichneten Ausführung umfassen die Ausbringelemente 10 Säschare 12, vgl. Figur 1.

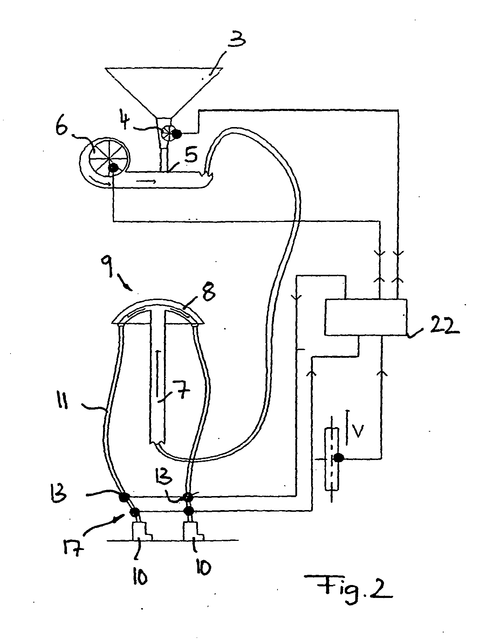

Zwischen dem besagten Verteilerkopf 8 und den Säscharen 12 ist eine in Figur 2 schematisch dargestellte Vereinzelungsvorrichtung 13 vorgesehen, die vorteilhafterweise kurz vor den Säscharen 12 angeordnet und/oder den Ausbringelementen 10 zugeordnet sein kann.

Die Vereinzelungsvorrichtung 13 kann grundsätzlich verschieden ausgebildet sein. In der gezeichneten Ausführung umfasst sie einen Vereinzelungsrotor 14, auf dessen Umfang die Saatgutkörner aus einer Zuführung 15 einlaufen und von dem sie über einen Auslauf 16 einzeln abgezogen werden.

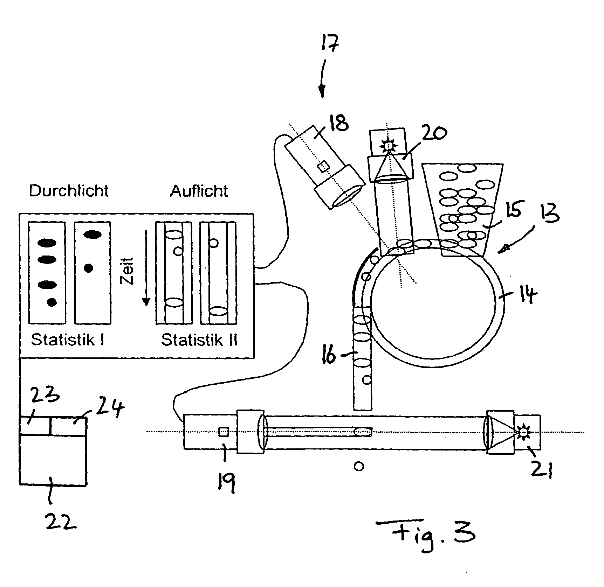

Wie Figur 3 zeigt, ist der Vereinzelungsvorrichtung 13 eine Bilderfassungsvorrichtung 17 zugeordnet, die eine erste Kamera 18 sowie eine zweite Kamera 19 aufweist. Die erste Kamera 18 beobachtet dabei den Einlaufbereich der Vereinzelungsvorrichtung 13. Wie Figur 3 zeigt, ist sie auf den Umfangsabschnitt des Vereinzelungsrotors 14 unmittelbar hinter der Zuführung 15 gerichtet. Eine Kollimationsoptik 20 mit einem Lichtemitter beleuchtet dabei den genannten Umfangsabschnitt des Vereinzelungsrotors 14 bzw. die darauf auflaufenden Saatgutkörner. Die erste Kamera 18 erfasst diese Saatgutkörner im Auflichtverfahren, wobei insbesondere der zeitliche Einlauf der Körner erfasst wird und/oder erfasst wird, wie und ob die Körner der Reihe nach ankommen.

Die zweite Kamera 19 beobachtet hingegen den Austrittsbereich der Vereinzelungsvorrichtung 18. Eine zweite Kollimationsoptik 21 beleuchtet dabei die aus dem Auslauf 16 ausgeworfenen Saatgutkörner von der einen Seite her, während die zweite Kamera 19 von der gegenüberliegenden Seite her die beschatteten Seiten der Saatgutkörner erfasst. Die zweite Kamera 19 arbeitet also im Durchlichtverfahren und erfasst die zeitliche Abfolge der austretenden Körner und zählt diese.

Die beiden Kameras 18 und 19 arbeiten dabei mit Belichtungszeiten im Bereich von 50 Millisekunden bis 2 Millisekunden, wobei die Belichtungszeiten vorteilhafterweise in Abhängigkeit der Drehzahl des Vereinzelungsrotors 14, des Saatguts, der Beleuchtungsintensität, Saatgut- und/oder Beleuchtungsfarbe und ggf. alternativen oder weiteren Betriebsparametern variabel gesteuert wird.

Die Ortsauflösung der Kameras 18 und 19 kann ebenfalls variabel gewählt werden, insbesondere in Abhängigkeit der Belichtungszeit, der verwendeten Kamera, des Kameraobjektivs und der Geometrie der Vereinzelungseinrichtung, wobei typischerweise eine Objektgröße von 8 mm bis 30 mm auf 128, 256 oder 512 Bildelemente abgebildet wird.

Wie Figur 3 zeigt, sind die beiden Kameras mit einer Steuereinrichtung 22 verbunden, die eine Bildvergleichseinrichtung 23 sowie eine Bildauswerteeinrichtung 24 umfasst, mittels derer kausale Zusammenhänge zwischen Einlauf- und Auswurfhäufungen von Saatgut anhand der von den beiden Kameras 18 und 19 gelieferten Bildern erkannt werden können. Die Bildauswertung erfolgt hierbei insbesondere statistisch hinsichtlich der zeitlichen Abfolge der Saatgutauswurfzeiten. Gegebenenfalls kann ein Histogramm der Auswurfpositionen erstellt werden, vorteilhafterweise etwa einmal pro Sekunde.

Werden kausale Zusammenhänge zwischen Einlauf- und Auswurfhäufungen erkannt, kann die Steuereinrichtung 22 in die Maschinensteuerung der Sämaschine 1 eingreifen und diverse Betriebsparameter der Sämaschine 1 verändern, so z. B. die Drehzahl des Vereinzelungsrotors 14, die Geschwindigkeit bzw. Dosiermenge der Dosiervorrichtung 4, die Justierparameter des Verteilerkopfes 8, die Ablagetiefe der Säschare 12 sowie eine exakte Längs- und Querverteilung und ggf. weitere Parameter.

## Patentansprüche

1. Sämaschine mit einem Saatgutspeicher (3), der über einen Saatgutverteiler (9) mit einer Mehrzahl von Ausbringelementen (10), insbesondere Säscharen (12) oder Särohren, verbindbar ist, wobei den Ausbringelementen (10) jeweils eine Vereinzelungsvorrichtung (13) zur Vereinzelung der Saatgutkörner zugeordnet ist, **dadurch gekennzeichnet, dass** eine Bilderfassungsvorrichtung (17) zur Erfassung des Saatgutaustrags eine erste Kamera (18), die den Einlauf der Vereinzelungsvorrichtung (13) beobachtet, und eine zweite Kamera (19), die den Austritt der Vereinzelungsvorrichtung (13) beobachtet, aufweist, wobei die beiden Kameras (18, 19) der Bilderfassungsvorrichtung (17) mit einer Steuereinrichtung (22) zur Steuerung zumindest eines Maschinenparameters in Abhängigkeit der von den beiden Kameras (18, 19) erfassten Bilder verbunden sind, wobei die Steuereinrichtung (22) eine Bildvergleichseinrichtung (23) zum Vergleichen der Bilder der ersten Kamera (18) mit den Bildern der zweiten Kamera (19) sowie eine Bildauswerteeinrichtung (24) zur Bestimmung von Zusammenhängen zwischen Einlaufhäufungen und Auslaufhäufungen in Abhängigkeit des Bildvergleichs aufweist, wobei der zumindest eine Maschinenparameter in Abhängigkeit des bestimmten Zusammenhangs zwischen Einlauf- und Auslaufhäufungen steuerbar ist.

2. Sämaschine nach dem vorhergehenden Anspruch, wobei der zumindest eine Maschinenparameter eine Gebläsedrehzahl, eine Dosiervorrichtungsgeschwindigkeit, eine Vereinzelungsvorrichtungsgeschwindigkeit, eine Verteilerkopfjustierung, eine Schleppergeschwindigkeit, eine Ablagetiefe und/oder eine exakte Längs- und Querverteilung der Ausbringelemente (10) umfasst.

3. Sämaschine nach einem der vorhergehenden Ansprüche, wobei die Bildauswerteeinrichtung (24) statistisch arbeitend ausgebildet ist und/oder den Verlauf der Körnerzahl im Einlauf der Vereinzelungsvorrichtung (13) über der Zeit und den Verlauf der Körnerzahl im Austritt der Vereinzelungsvorrichtung (13) über der Zeit bestimmt und miteinander vergleicht.

4. Sämaschine nach einem der vorhergehenden Ansprüche, wobei die erste Kamera (18) von der zweiten Kamera (19) verschieden ausgebildet ist.

5. Sämaschine nach einem der vorhergehenden Ansprüche, wobei die erste Kamera (18) im Auflichtverfahren arbeitend ausgebildet ist.

6. Sämaschine nach einem der vorhergehenden Ansprüche, wobei die zweite Kamera (19) im Durchlichtverfahren arbeitend ausgebildet ist.

7. Sämaschine nach einem der vorhergehenden Ansprüche, wobei die erste Kamera (18) und die zweite Kamera (19) jeweils Zeilenkameras bilden.

8. Sämaschine nach einem der vorhergehenden Ansprüche, wobei die erste Kamera (18) und/oder die zweite Kamera (19) Belichtungszeiten von 2 Millisekunden bis 50 Millisekunden umfassen.

9. Sämaschine nach einem der vorhergehenden Ansprüche, wobei ein Betriebsparameter der ersten und/oder der zweiten Kamera (18, 19) in Abhängigkeit eines Betriebsparameters der Sämaschine steuerbar ist.

10. Sämaschine nach dem vorhergehenden Anspruch, wobei die Belichtungszeit der ersten Kamera (18) und/oder der zweiten Kamera (19) in Abhängigkeit eines Betriebsparameters der Vereinzelungsvorrichtung (13), insbesondere einer Drehzahl der Vereinzelungsvorrichtung (13), gesteuert ist.

## Claims

1. A sowing machine having a seed storage (3) which is connectable via a seed distributor (9) to a plurality of deploying elements (10), in particular sowing shares (12) or sowing tube, wherein a respective singling apparatus (13) for the singling of the seed grains is associated with the deploying elements (10), **characterised in that** an image capturing device (17) for the capturing of the seed discharge has at least one first camera (18) which monitors the inflow of the singling apparatus (13) and a second camera (19) which monitors the outlet of the singling apparatus (13), wherein the two cameras (18, 19) of the image capturing apparatus (17) are connected to a control device (22) for the control of at least one machine parameter in dependence on the images captured by the two cameras (18, 19), wherein the control device (22) has an image comparison device (23) for the comparison of the images of the first camera (18) with the images of the second camera (19) as well as an image evaluation device (24) for the determination of relationships between inflow clusters and outflow clusters in dependence on the image comparison, and wherein the at least one machine parameter is controllable in dependence on the determined relationship between the inflow clusters and the outflow clusters.

2. A sowing machine in accordance with the preceding claim, wherein the at least one machine parameter includes a fan speed, a metering apparatus speed, a singling apparatus speed, a distributor head speed, a tractor speed, a store depth and/or an exact length distribution and transverse distribution of the deploying elements (10).

3. A sowing machine in accordance with one of the preceding claims, wherein the image evaluation device (24) is made to work statistically and/or determines the course of the grain number in the inflow of the singling apparatus (13) over time and determines the course of the grain number in the outlet of the singling apparatus (13) over time and compares them with one another.

4. A sowing machine in accordance with one of the preceding claims, wherein the first camera (18) is made differently to the first camera (19).

5. A sowing machine in accordance with one of the preceding claims, wherein the first camera (18) is made to work in the reflected light process.

6. A sowing machine in accordance with one of the preceding claims, wherein the first camera (19) is made to work in the transmitted light process.

7. A sowing machine in accordance with one of the preceding claims, wherein the first camera (18) and the second camera (19) each form line scan cameras.

8. A sowing machine in accordance with one of the preceding claims, wherein the first camera (18) and/or the second camera (19) include exposure times of 2 milliseconds up to 50 milliseconds.

9. A sowing machine in accordance with one of the preceding claims, wherein an operating parameter of the first and/or of the second camera (18, 19) is controllable in dependence on an operating parameter of the sowing machine.

10. A sowing machine in accordance with the preceding claim, wherein the exposure time of the first camera (18) and/or of the second camera (19) is controlled in dependence on an operating parameter of the singling apparatus (13), in particular on a speed of the singling apparatus (13).

## Revendications

1. Semoir avec un réservoir de semences (3) qui peut être relié par l'intermédiaire d'un dispositif de distribution de semences (9) à une pluralité d'éléments d'épandage (10), en particulier des socs de semoir (12) ou tuyaux de semoir, dans lequel respectivement un dispositif de séparation (13) pour séparer les graines de semences est attribué aux éléments d'épandage (10), **caractérisé en ce qu'**un dispositif d'acquisition d'images (17) pour acquérir le débit de semences présente une première caméra (18) observant l'entrée du dispositif de séparation (13) et une deuxième caméra (19) observant la sortie du dispositif de séparation (13), dans lequel les deux caméras (18, 19) du dispositif d'acquisition d'images (17) sont reliées à un dispositif de commande (22) pour commander au moins un paramètre de machine en fonction des images acquises par les deux caméras (18, 19), dans lequel le dispositif de commande (22) présente un dispositif de comparaison d'images (23) pour comparer les images de la première caméra (18) aux images de la deuxième caméra (19) ainsi qu'un dispositif d'évaluation d'image (24) pour déterminer des relations entre des accumulations d'entrée et des accumulations de sortie en fonction de la comparaison d'images, dans lequel ledit au moins un paramètre de machine peut être commandé en fonction de la relation déterminée entre les accumulations d'entrée et de sortie.

2. Semoir selon la revendication précédente, dans lequel ledit au moins un paramètre de machine comprend une vitesse de rotation de soufflante, une vitesse de dispositif de dosage, une vitesse de dispositif de séparation, un ajustage de la tête de distribution, une vitesse de tracteur, une profondeur de dépose et/ou une distribution longitudinale ou transversale exacte des éléments d'épandage (10).

3. Semoir selon l'une quelconque des revendications précédentes, dans lequel le dispositif d'évaluation d'images (24) est réalisé pour fonctionner de façon statistique et/ou détermine la courbe du nombre de graines dans l'entrée du dispositif de séparation (13) dans le temps et la courbe du nombre de graines dans la sortie du dispositif de séparation (13) dans le temps et les compare entre elles.

4. Semoir selon l'une quelconque des revendications précédentes, dans lequel la première caméra (18) est réalisée différemment de la deuxième caméra (19).

5. Semoir selon l'une quelconque des revendications précédentes, dans lequel la première caméra (18) est réalisée pour fonctionner en mode de lumière réfléchie.

6. Semoir selon l'une quelconque des revendications précédentes, dans lequel la deuxième caméra (19) est réalisée pour fonctionner en mode de lumière transmise.

7. Semoir selon l'une quelconque des revendications précédentes, dans lequel la première caméra (18) et la deuxième caméra (19) sont respectivement des caméras linéaires.

8. Semoir selon l'une quelconque des revendications précédentes, dans lequel la première caméra (18) et/ou la deuxième caméra (19) comprennent des temps de pose de 2 millisecondes à 50 millisecondes.

9. Semoir selon l'une quelconque des revendications précédentes, dans lequel un paramètre opérationnel de la première et/ou de la deuxième caméra (18, 19) peut être commandé en fonction d'un paramètre opérationnel du semoir.

10. Semoir selon la revendication précédente, dans lequel le temps de pose de la première caméra (18) et/ou de la deuxième caméra (19) est commandé en fonction d'un paramètre opérationnel du dispositif de séparation (13), en particulier d'une vitesse de rotation du dispositif de séparation (13).
